(19) Europäisches Patentamt / European Patent Office / Office européen des brevets

(11) **EP 3 789 215 B1**

(12) **EUROPÄISCHE PATENTSCHRIFT**

(45) Veröffentlichungstag und Bekanntmachung des Hinweises auf die Patenterteilung:
**22.03.2023   Patentblatt 2023/12**

(21) Anmeldenummer: **20192324.0**

(22) Anmeldetag: **24.08.2020**

(51) Internationale Patentklassifikation (IPC):
**B60C 11/24** *(2006.01)*     B60C 19/00 *(2006.01)*

(52) Gemeinsame Patentklassifikation (CPC):
**B60C 11/246;** B60C 2019/004

(54) **VERFAHREN ZUR ERMITTLUNG EINER PROFILTIEFE EINES FAHRZEUGREIFENS**

METHOD FOR DETERMINING A TREAD DEPTH OF A VEHICLE TYRE

PROCÉDÉ DE DÉTERMINATION D'UNE PROFONDEUR DE PROFIL D'UN PNEU DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2019   DE 102019213644**

(43) Veröffentlichungstag der Anmeldung:
**10.03.2021   Patentblatt 2021/10**

(73) Patentinhaber: **Continental Reifen Deutschland GmbH**
**30165 Hannover (DE)**

(72) Erfinder:
• **Sahlmüller, Baldo**
**30419 Hannover (DE)**
• **Lehmann, Joerg**
**30419 Hannover (DE)**

(74) Vertreter: **Continental Corporation**
**c/o Continental AG**
**Intellectual Property**
**Postfach 169**
**30001 Hannover (DE)**

(56) Entgegenhaltungen:
WO-A1-2009/080409     CN-A- 106 515 318
CN-A- 108 790 619     DE-A1-102014 214 465
DE-A1-102015 117 024     DE-A1-102015 216 212
GB-A- 2 559 141

**Beschreibung**

Die Erfindung betrifft ein Verfahren zur Ermittlung einer Profiltiefe eines Fahrzeugreifens.

Es ist bekannt, bei Fahrzeugreifen eine Reifendrucküberwachung einzusetzen, um einen Druckverlust sicher zu detektieren.

Außerdem gibt es unterschiedliche Ansätze, die Profiltiefe eines Fahrzeugreifens mit einem Reifensensor zu ermitteln. Die meisten bisherigen Konzepte wurden jedoch nicht umgesetzt, da sie unterschiedliche Nachteile besitzen.

Die DE 10 2014214465 A1, CN 108 790 619 A, DE 10 2015117024 A1, GB 2 559 141 A, WO 2009/080409 A1 und CN 106 51 5 318 A offenbaren bekannte Verfahren und Vorrichtungen zur Bestimmung einer Profiltiefe.

Der Erfindung lag die Aufgabe zugrunde, ein Verfahren bereitzustellen, mit dem bekannte Verfahren zur Bestimmung einer Profiltiefe verbessert werden können.

Gelöst wird die Aufgabe durch ein Verfahren nach Anspruch 1.

Ein Vorteil der Erfindung ist insbesondere darin zu sehen, dass mit dem neuen Verfahren der Profilabrieb im Fahrzeugreifen auf einfache Weise und automatisiert abgeschätzt werden kann.

Dadurch lässt sich die Profiltiefe des Fahrzeugreifens auf einfache Art bestimmen oder abschätzen.

Erreicht die Profiltiefe einen bestimmten Mindestwert, kann automatisiert eine Warnung an den Fahrzeughalter ausgegeben werden. Ein entsprechender Sensor kann sowohl auf der Reifeninnenseite, als auch in verschiedenen Reifenbauteilen integriert sein.

Die Radialbeschleunigung lässt sich auf einfach Weise mit einem entsprechenden Beschleunigungssensor bestimmen.

Mit der gleichbleibenden Radialbeschleunigung lässt sich anschließend die Kilometerlaufleistung über einfache mathematische Gleichungen berechnen.

Mit zunehmender Kilometerlaufleistung nimmt aufgrund von Profilabrieb ebenfalls die Profiltiefe ab. Im Normalfall ist der Zusammenhang zwischen Kilometerlaufleistung und verbleibender Profiltiefe linear voneinander abhängig.

Es ist vorgesehen, dass der Sensor statt der gleichmäßigen Radialbeschleunigungen des Fahrzeugreifens eine Radialbeschleunigung in definierten regelmäßgen zeitlichen Abständen ermittelt. Dies verringert die Zeit, in der der Sensor aktiv messen muss und somit auch den Energieverbrauch des Sensors.

Es ist vorgesehen, dass der Sensor die Radialbeschleunigungen des Fahrzeugreifens beim Ein- und Auslaufen in die Bodenaufstandsfläche aufzeichnet, wobei die ermittelten Messkurven analysiert werden und anschließend mit einem Algorithmus eine Profiltiefe in Abhängigkeit des Messkurvenverlaufes ermittelt wird. Der Sensor zeichnet ebenfalls den Beschleunigungsverlauf beim Ein- und Auslaufen in die Bodenaufstandsfläche auf. Mit dem gemessenen Beschleunigungsverlauf lässt mit mathematischen Methoden ebenfalls eine Profiltiefe für den Fahrzeugreifen ermitteln.

Es ist vorgesehen, dass die Profiltiefe (PTM) in Abhängigkeit des Messkurvenverlaufes mit der Profiltiefe (PTK) in Abhängigkeit der Kilometerlaufleistung verglichen wird, wobei nachfolgend der Wert für die Profiltiefe (PTM) in Abhängigkeit des Messkurvenverlaufes überprüft und ggf. angepasst wird.

Dadurch kann der Wert für die Profiltiefe in Abhängigkeit des Messkurvenverlaufes auf einfach Weise überprüft und gegebenenfalls angepasst werden.

In einer weiteren vorteilhaften Weiterbildung der Erfindung ist vorgesehen, dass die Analyse des Messkurvenverlaufes mit einer Verarbeitungseinheit außerhalb des Fahrzeugreifens erfolgt.

Dadurch können die Messkurvenverläufe mit Messkurvenverläufen von anderen Fahrzeugreifen verglichen werden.

In einer weiteren vorteilhaften Weiterbildung der Erfindung ist vorgesehen, dass bei der Bestimmung der Profiltiefe weitere Informationen wie die Reifendimension, der Reifentyp und/oder die Fahrzeugachse berücksichtigt werden.

Dadurch kann die Genauigkeit bei der Bestimmung bzw. Abschätzung der Profiltiefe deutlich erhöht werden.

In einer weiteren vorteilhaften Weiterbildung der Erfindung ist vorgesehen, dass alle Informationen von den Sensoren im Fahrzeugreifen und die weiteren Informationen zum Fahrzeugreifen an ein Backendsystem im Internet weitergeleitet werden, wobei bei der Bestimmung der Profiltiefe ein Algorithmus des maschinellen Lernens eingesetzt wird. Dadurch kann die Genauigkeit bei der Bestimmung der Profiltiefe wesentlich erhöht werden.

In einer weiteren vorteilhaften Weiterbildung der Erfindung ist vorgesehen, dass der Sensor in einem Reifenmodul integriert ist, wobei das Reifenmodul auf der Reifeninnenseite angeordnet ist und die Messdaten über eine Funkverbindung zu einer zentralen Empfangseinheit im Fahrzeug übertragen werden. Dadurch wird die automatisierte Auswertung der Messdaten vom Sensor vereinfacht.

In einer weiteren vorteilhaften Weiterbildung der Erfindung ist vorgesehen, dass im Armaturenbrett des Fahrzeuges die Profiltiefe des Fahrzeugreifens automatisiert angezeigt wird.

Dadurch wird der Fahrzeughalter bzw. der Fahrer des Fahrzeuges auf einfache Weise gewarnt, wenn eine Mindestprofiltiefe unterschritten wird.

Anhand eines Ausführungsbeispiels wird die Erfindung im Folgenden näher beschrieben.

Es zeigt:

Fig. 1: Einen Fahrzeugreifen mit Sensor in einer Seitenansicht.
Fig. 2: Einen Beschleunigungsverlauf.
Fig. 3: Die Änderung der Profiltiefe im zeitlichen Verlauf.

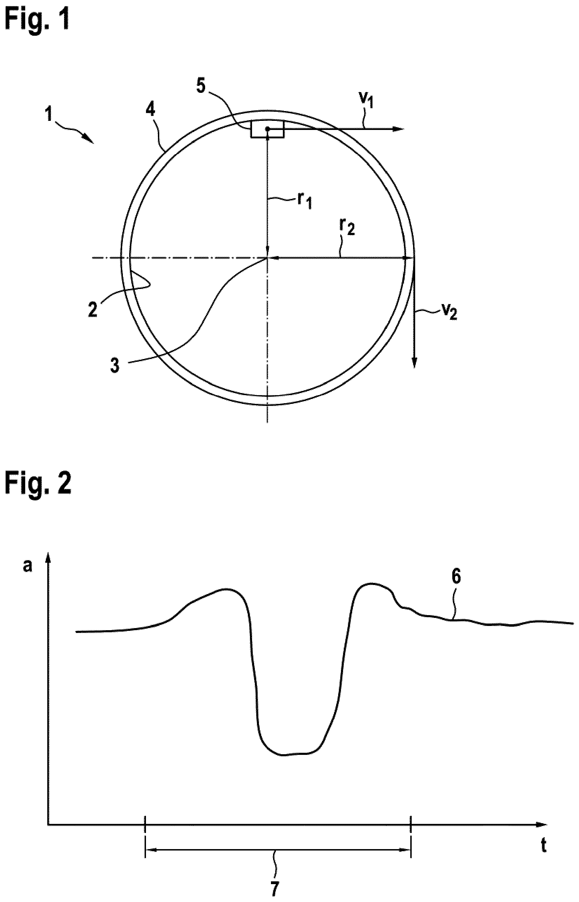

Die Figur 1 zeigt schematisch einen Fahrzeugreifen 1 mit einem Reifenmodul 5, welches auf der Reifeninnenseite 2 angeordnet ist.

Mit dem neuen Verfahren wird die Profiltiefe des Laufstreifens 4 bestimmt bzw. abgeschätzt.

Der Abstand zwischen dem Mittelpunkt 3 und der Position des Sensors im Reifenmodul 5 ist mit dem Radius r1 dargestellt. Beim Abrollen auf einer Fahrbahn hat der Sensor eine Geschwindigkeit v1 in tangentialer Richtung.

Der Abstand zwischen dem Mittelpunkt 3 des Fahrzeugreifens und der Oberseite des Laufstreifens 4 ist mit dem Radius r2 dargestellt. Bei einer Rotation des Fahrzeugreifens hat ein Punkt auf der Oberseite des Laufstreifens 4 eine tangentiale Geschwindigkeit v2. Mit dem Beschleunigungssensor im Reifenmodul 5 wird eine Radialbeschleunigung a gemessen.

Die Beschleunigung a und die Geschwindigkeit v1 und r1 stehen wie folgt miteinander in Beziehung:

$$a = (v1)^2/r1 \qquad (1)$$

Die Größen v1, v2, r1 und r2 stehen folgendermaßen miteinander in Beziehung:

$$v2/v1 = r2/r1 \qquad (2)$$

Die Reifendicke x lässt sich über folgenden Zusammenhang ermitteln:

$$r2 = r1 + x \qquad (3)$$

Die zurückgelegte Strecke S lässt sich wie folgt ermitteln, wobei t ein Messintervall darstellt:

$$S = v2*t \qquad (4)$$

Um die Kilometerlaufleistung des Fahrzeugreifens zu bestimmen, werden die oben genannten Gleichungen miteinander kombiniert.

Mit der gleichbleibenden Beschleunigung, die der Sensor außerhalb der Bodenaufstandsfläche misst, lässt sich die Kilometerleistung des Fahrzeugreifens abschätzen. Da mit zunehmender Kilometerlaufleistung ebenfalls die Profiltiefe abnimmt, kann diese Kilometerleistung zur Abschätzung der Profiltiefe herangezogen werden.

Die Kilometerlaufleistung des Fahrzeugreifens kann ebenfalls bestimmt werden, indem die Radialbeschleunigung des Sensors in regelmäßigen zeitlichen Abständen von mehreren Sekunden, beispielsweise 16 Sekunden, gemessen wird. Hierbei wird angenommen, dass die Geschwindigkeit für den zeitlichen Abstand konstant ist. Die Messgenauigkeit wird durch diese Methode zwar um wenige Prozent schlechter, dafür wird der Energieverbrauch des Sensors deutlich gesenkt, da er nicht kontinuierlich misst.

Die Figur 2 zeigt ein Beispiel für einen Beschleunigungsverlauf, den der Sensor im Reifenmodul misst. Auf der x-Achse ist die Zeit t in Sekunden aufgetragen. Auf der y-Achse ist die Radialbeschleunigung a aufgetragen. Beim Ein- und Auslaufen des Sensors in die Bodenaufstandsfläche wird ein typisches Beschleunigungssignal gemessen, wie es für den Zeitraum 7 dargestellt ist. Außerhalb des Ein- und Auslaufens in die Bodenaufstandsfläche wird ein gleichbleibender Beschleunigungswert 6 gemessen. Mit diesem gleichbleibenden Beschleunigungswert 6 wird eine Profiltiefe abgeschätzt, die von der Kilometerlaufleistung des Fahrzeugsreifens abhängig ist.

Mit dem Beschleunigungsverlauf 7 wird eine zweite Profiltiefe abgeschätzt, die von dem dargestellten Messkurvenverlauf im Zeitraum 7 abhängig ist.

Bei der Bestimmung der Profiltiefe in Abhängigkeit vom Messkurvenverlauf 7 wird auf ein bekanntes Verfahren zugegriffen.

Bei diesem Verfahren werden insbesondere die Steigungen des Messkurvenverlaufes untersucht.

Das entsprechende Verfahren ist u.a. in der Offenlegungsschrift DE102015216212 beschrieben.

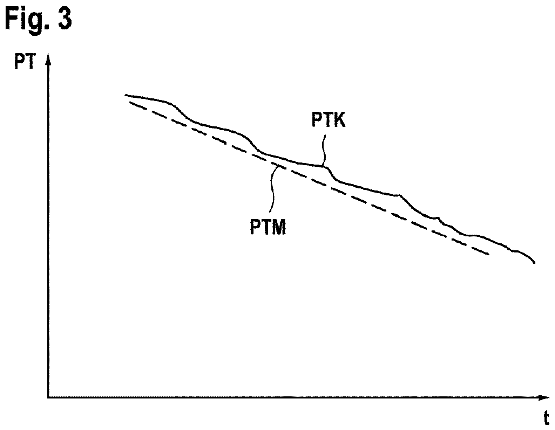

Die Figur 3 zeigt zwei Verläufe für die ermittelten Profiltiefen.

Auf der X-Achse ist die Zeit t aufgetragen. Auf der Y-Achse ist die Profiltiefe PT aufgetragen. Der erste Kurvenverlauf PTK zeigt die abgeschätzte Profiltiefe, die von der Kilometerlaufleistung des Fahrzeugreifens abhängig ist.

Der zweite Kurvenverlauf PTM zeigt die ermittelte Profiltiefe, die vom ausgewerteten Messkurvenverlauf des Beschleunigungssignals abhängig ist.

Der Kurvenverlauf für die Profiltiefe PTK kann dazu genutzt werden, um die ermittelte Profiltiefe, die vom Messkurvenverlauf abhängig ist, zu kontrollieren und gegebenenfalls anzupassen.

## Bezugszeichenliste

1 Fahrzeugreifen
2 Reifeninnenseite
3 Mittelpunkt des Fahrzeugreifens
4 Laufstreifen
5 Reifenmodul mit Sensor
6 Gleichbleibende Radialbeschleunigung
7 Beschleunigungsverlauf beim Ein- und Auslaufen in die Bodenaufstandsfläche

a     Radialbeschleunigung
r1    Radius 1 (Abstand vom Mittelpunkt zum Sensor im Reifenmodul)
r2    Radius 2 (Abstand vom Mittelpunkt zur Außenseite des Laufstreifens)
v1    Geschwindigkeit des Sensors
v2    Geschwindigkeit an der Oberseite des Laufstreifens
t     Zeit
x    Reifendicke
PT   Profiltiefe
PTK  Profiltiefe in Abhängigkeit der Kilometerlaufleistung
PTM  Profiltiefe in Abhängigkeit des Messkurvenverlaufes 7

**Patentansprüche**

1. Verfahren zur Ermittlung einer Profiltiefe eines Fahrzeugreifens mit den folgenden Schritten:

   a) Bereitstellen eines Fahrzeugreifens (1) mit einem im Fahrzeugreifen (1) angeordneten Sensor zur Messung von Radialbeschleunigungen (a),
   b) Regelmäßiges Messen der Radialbeschleunigungen (a) am Fahrzeugreifen während der Fahrt,
   c) Ermitteln eines gleichbleibenden Beschleunigungswertes (6) während der Fahrt,
   d) Ermitteln einer Kilometerlaufleistung für den Fahrzeugreifens (1) mit dem gleichbleibenden Beschleunigungswert (6),
   e) Abschätzen einer verbleibenden Profiltiefe (PTK) in Abhängigkeit der erreichten Kilometerlaufleistung des Fahrzeugreifens (1),

   **dadurch gekennzeichnet, dass**

   der Sensor die Radialbeschleunigungen (a) des Fahrzeugreifens (1) beim Ein- und Auslaufen in die Bodenaufstandsfläche aufzeichnet, wobei die ermittelten Messkurven analysiert werden und anschließend mit einem Algorithmus eine Profiltiefe (PTM) in Abhängigkeit des Messkurvenverlaufes (7) ermittelt wird, wobei die Profiltiefe (PTM) in Abhängigkeit des Messkurvenverlaufes (7) mit der Profiltiefe (PTK) in Abhängigkeit der Kilometerlaufleistung verglichen wird, wobei nachfolgend der Wert für die Profiltiefe (PTM) in Abhängigkeit des Messkurvenverlaufes (7) überprüft und ggf. angepasst wird

2. Verfahren nach dem vorhergehenden Anspruch,
   **dadurch gekennzeichnet, dass**
   die Analyse des Messkurvenverlaufes (7) mit einer Verarbeitungseinheit außerhalb des Fahrzeugreifens (1) erfolgt.

3. Verfahren nach einem der vorhergehenden Ansprüche,
   **dadurch gekennzeichnet, dass**
   bei der Bestimmung der Profiltiefe (PTM, PTK) weitere Informationen wie die Reifendimension, der Reifentyp und/oder die Fahrzeugachse berücksichtigt werden.

4. Verfahren nach einem der vorhergehenden Ansprüche,
   **dadurch gekennzeichnet, dass**

   der Sensor in einem Reifenmodul (5) integriert ist,
   wobei das Reifenmodul (1) auf der Reifeninnenseite (2) angeordnet ist und die Messdaten über eine Funkverbindung zu einer zentralen Empfangseinheit im Fahrzeug übertragen werden.

5. Verfahren nach einem der vorhergehenden Ansprüche,
   **dadurch gekennzeichnet, dass**
   im Armaturenbrett des Fahrzeuges die Profiltiefe (PTM, PTK) des Fahrzeugreifens (1) automatisiert angezeigt wird.

6. Verfahren nach einem der vorhergehenden Ansprüche,
   **dadurch gekennzeichnet, dass**
   alle Informationen von den Sensoren im Fahrzeugreifen (1) und die weiteren Informationen zum Fahrzeugreifen (1) an ein Backendsystem im Internet weitergeleitet werden, wobei bei der Bestimmung der Profiltiefe ein Algorithmus des maschinellen Lernens eingesetzt wird.

**Claims**

1. Method for determining a tread depth of a vehicle tyre, having the following steps:

   a) providing a vehicle tyre (1) having a sensor, arranged in the vehicle tyre (1), for measuring radial accelerations (a),
   b) regularly measuring the radial accelerations (a) on the vehicle tyre while travelling,
   c) determining a constant acceleration value (6) while travelling,
   d) determining a mileage for the vehicle tyre (1) using the constant acceleration value (6),
   e) estimating a remaining tread depth (PTK) on the basis of the mileage reached by the vehicle tyre (1),

**characterized in that**

the sensor records the radial accelerations (a) of the vehicle tyre (1) on entering and exiting the ground contact surface, wherein the determined measurement curves are analysed and then an algorithm is used to determine a tread depth (PTM) on the basis of the measurement curve shape (7), wherein the tread depth (PTM) on the basis of the measurement curve shape (7) is compared with the tread depth (PTK) on the basis of the mileage, the value for the tread depth (PTM) on the basis of the measurement curve shape (7) subsequently being checked and if need be adjusted.

2. Method according to the preceding claim, **characterized in that** the measurement curve shape (7) is analysed using a processing unit outside the vehicle tyre (1).

3. Method according to either of the preceding claims, **characterized in that** further information such as the tyre dimension, the tyre type and/or the vehicle axle is taken into consideration when determining the tread depth (PTM, PTK).

4. Method according to one of the preceding claims, **characterized in that**

the sensor is integrated in a tyre module (5), the tyre module (1) being arranged on the inside (2) of the tyre and the measurement data being transmitted to a central receiving unit in the vehicle via a radio connection.

5. Method according to one of the preceding claims, **characterized in that** the tread depth (PTM, PTK) of the vehicle tyre (1) is displayed in automated fashion on the dashboard of the vehicle.

6. Method according to one of the preceding claims, **characterized in that** all the information from the sensors in the vehicle tyre (1) and the further information relating to the vehicle tyre (1) is forwarded to a backend system on the Internet, wherein a machine learning algorithm is used for determining the tread depth.

**Revendications**

1. Procédé permettant de déterminer une profondeur de profil d'un pneumatique de véhicule, comprenant les étapes suivantes consistant à :

a) fournir un pneumatique de véhicule (1) pourvu d'un capteur disposé dans le pneumatique de véhicule (1) et destiné à mesurer des accélérations radiales (a),
b) mesurer régulièrement les accélérations radiales (a) au niveau du pneumatique de véhicule pendant la marche,
c) déterminer une valeur d'accélération constante (6) pendant la marche,
d) déterminer un kilométrage pour le pneumatique de véhicule (1) avec la valeur d'accélération constante (6),
e) évaluer une profondeur de profil (PTK) restante en fonction du kilométrage atteint du pneumatique de véhicule (1),
**caractérisé en ce que** le capteur enregistre les accélérations radiales (a) du pneumatique de véhicule (1) à l'entrée dans et à la sortie de la surface de contact avec le sol, dans lequel les courbes de mesure déterminées sont analysées, et ensuite une profondeur de profil (PTM) est déterminée à l'aide d'un algorithme en fonction de l'allure des courbes de mesure (7), dans lequel la profondeur de profil (PTM) est comparée en fonction de l'allure des courbes de mesure (7) avec la profondeur de profil (PTK) en fonction du kilométrage, dans lequel par la suite la valeur pour la profondeur de profil (PTM) est vérifiée et le cas échéant ajustée en fonction de l'allure des courbes de mesure (7).

2. Procédé selon la revendication précédente, **caractérisé en ce que** l'analyse de l'allure des courbes de mesure (7) est effectuée à l'aide d'une unité de traitement à l'extérieur du pneumatique de véhicule (1).

3. Procédé selon l'une quelconque des revendications précédentes, **caractérisé en ce que** lors de la détermination de la profondeur de profil (PTM, PTK), des informations supplémentaires, telles que la dimension du pneu, le type de pneu et/ou l'essieu de véhicule, sont prises en compte.

4. Procédé selon l'une quelconque des revendications précédentes, **caractérisé en ce que** le capteur est intégré dans un module de pneumatique (5), dans lequel le module de pneumatique (1) est disposé sur la face intérieure de pneumatique (2), et les données de mesure sont transmises par une liaison radio à une unité de réception centrale dans le véhicule.

5. Procédé selon l'une quelconque des revendications précédentes, **caractérisé en ce que** la profondeur de profil (PTM, PTK) du pneumatique de véhicule (1) est affichée de façon automatisée sur le tableau de bord du véhicule.

6. Procédé selon l'une quelconque des revendications précédentes, **caractérisé en ce que** toutes les informations des capteurs dans le pneumatique de véhicule (1) et les informations supplémentaires concernant le pneumatique de véhicule (1) sont retransmises à un système de gestion sur internet, dans lequel lors de la détermination de la profondeur de profil, un algorithme d'apprentissage machine est mis en oeuvre.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014214465 A1
- CN 108790619 A
- DE 102015117024 A1
- GB 2559141 A
- WO 2009080409 A1
- CN 106515318 A
- DE 102015216212